# EUROPEAN PATENT SPECIFICATION

(11) **EP 4 638 984 B1**
(45) Date of publication and mention of the grant of the patent: **23.09.2026**
(21) Application number: 23844130.7
(22) Date of filing: 19.12.2023
(51) Int. Cl.: F16G 15/06

(54) **A CAP FOR ENCLOSING A PORTION OF A SHACKLE, A SYSTEM, AND A METHOD OF USING SAME**
KAPPE ZUM EINSCHLIESSEN EINES TEILS EINES SCHÄKELS, SYSTEM UND VERFAHREN ZUR VERWENDUNG DAVON
CAPUCHON DESTINÉ À RENFERMER UNE PARTIE D'UNE MANILLE, SYSTÈME ET PROCÉDÉ D'UTILISATION ASSOCIÉ

(30) Priority: 20.12.2022 NO 20221368
(43) Date of publication of application: 29.10.2025
(73) Proprietor: AUSTHEIM HOLDING AS, 5058 Bergen (NO)
(72) Inventor: RABBEN, Joachim Norstrøm, 5058 Bergen (NO)
(74) Representative: Håmsø Patentbyrå AS
(86) International application number: PCT/NO2023/060130
(87) International publication number: WO 2024/136671

(56) References cited:
- WO-A1-2023/121442
- FR-A- 643 673
- GB-A- 190 724 038
- JP-U- S5 582 542
- JP-U- S56 166 345
- US-A- 5 460 418

## Description

The present invention is related to a protective device. More specifically, the invention is related to a cap for enclosing a portion of a shackle, a system comprising the cap and a shackle, and a method of using the cap.

A key area of application for the invention is in connection with marine offshore mooring operations. In what follows, the invention is therefore described in relation to such an operation.

In an offshore mooring system, a shackle may form part of a mooring line for connecting for example an end of a chain to a loop of a rope, typically a synthetic rope. As will be appreciated by a person skilled in the art, a shackle for use in such a mooring line comprises a shackle bow, a shackle pin, a shackle nut for preventing relative movement between the shackle pin and shackle bow, and a shackle securing bolt for preventing unintended release of the shackle nut from the shackle pin. In an operating position, the shackle securing bolt is arranged through a bore in an end portion of the shackle pin. A longitudinal axis of the shackle securing bolt is typically perpendicular to a longitudinal axis of the shackle pin.

A mooring rope for an offshore mooring system is typically tailormade for its intended use with respect to length and position in the mooring system. Therefore, the mooring rope are assembled on a deck of vessel, such as an AHTS-vessel during mobilization, (ATHS - Anchor Handling Tug Supply). After being assembled, the mooring line is spooled onto a drum or reel of a winch for storing the mooring rope, prior to being installed offshore.

When spooling and unspooling the assembled mooring rope onto and off the reel, the shackle will abut against and may be moved relative to the rope forming part of the mooring line. Most parts of the shackle have a smooth surface which normally does not represent any risk of damaging the rope. However, the shackle nut, the threads of the shackle pin extending beyond the shackle nut, and in particular the end portions of the shackle securing bolt protruding from the bore of the shackle pin, represents a risk of damaging the mooring rope when being wound onto and off the winch reel. Said nut, threads of the pin, and securing bolt, may also damage other objects when hitting such objects. Further, the shackle securing bolt itself may also be damaged when hitting an object.

To reduce the above risk, a common procedure in the offshore mooring industry is to wrap the complete shackle in a large mat that are secured tied by a rope. A common size of the mat is typically 2 x 2 meters. To wrap the shackle, the shackle has to be raised from the deck of the vessel. A shackle in an offshore mooring line typically has a weight of 200-300 kilograms. Therefore, a hoisting device will be needed to raise the shackle, chain links adjacent the shackle, and a portion of the rope being adjacent the shackle, from the deck of the vessel. In addition to the hoisting device (typically a crane), handling the mat and securing the mat with respect to the shackle, typically requires three to four operators. The mooring operation offshore often requires a weather window, typically below 3.5m significant wave height and below 30 knots wind, 10m above sea surface, to be able to work safely on deck of the vessels. A typical wrapping operation requires between 5-10 minutes to install, and 2-5 minutes to remove. By limiting or preferably eliminating these operations, the personnel exposure on deck will be reduced, hence reducing the risk of injuries for the personnel involved in the operation. Limiting or eliminating said operations will also reduce the total weather window required for the total mooring operation. By using the cap according to the invention instead of common practice of using mats and securing rope are eliminated and thereby reduce time compared to today's practise; 1) Installation of mats during mobilization onshore, 2) removing of mats during installation offshore, 3) installation of mats during recovery offshore, and 4) removing mats during demobilization onshore.

When a shackle of the mooring line is covered by the mat, it is not possible to observe how or if the shackle and rope contact each other while being spooled onto the winch reel, and it is thus not possible to observe if the rope is subject to wear/damage by the shackle. Any damage on a rope may typically not be detected until an inspection of the rope is executed during de-mobilization at an end of an offshore mooring operation.

There is therefore a risk of utilizing a damaged mooring line in a mooring operation.

Publication US 2020/0339390 A1 discloses a shackle clamp assembly that has one end configured as a cap for insertion on the end of a shackle bolt attached to a U-shaped shackle and second end configured as a loop for attachment around the U-shaped shackle. The cap has an aperture that aligns with a through-bore in the end of the shackle bolt. A pin is inserted through the aperture of the cap and the through-bore of the shackle bolt to retain the cap on the end of the shackle bolt. The cap abuts the nut threaded on the end of the shackle bolt to ensure that the nut does not become disconnected from the shackle bolt. Another example of a cap is shown in GB24038A. However, neither US2020/0339390 nor GB24038A show the shoulders as in claim 1.

From the above, there is a long felt need in the offshore mooring industry for a more cost effective and safe apparatus and method for protecting an object against damage from at least a shackle securing bolt.

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claims. The dependent claims define advantageous embodiments of the invention.

In a first aspect of the invention, there is provided a cap for protecting an object against damage from at least a shackle securing bolt configured for preventing unintended release of a nut threadedly connected to a pin end of a shackle pin inserted through eyes of a shackle bow.

The cap comprises:
- an end face for facing an eye of a shackle, and a cap housing extending from the end face;
- a recess extending from the end face and into the cap housing, the recess configured for, in a position of use of the cap, enclosing at least the pin end of the shackle pin; and
- a bore extending through the cap housing, the bore configured for receiving a shackle securing bolt having a bolt head and a threaded end portion for receiving a bolt nut.

The bore of the cap comprises shoulders for, in an operating position of the cap, supporting both the bolt head and the bolt nut of the shackle securing bolt.

Thus, in an operating position, i.e. in a position of use, the cap is secured to the shackle by means of the shackle securing bolt. Therefore, no additional securing means is required to secure the cap to the shackle.

By enclosing at least the pin end of the shackle pin within the recess of the cap, sharp edges at an end portion of the shackle pin are prevented from damaging objects abutting against the cap.

An effect of the shoulders for supporting both the bolt head and the bolt nut of the shackle securing bolt, is that the shoulders are clamped against the pin end of the shackle securing bolt when this is tensioned when tightening the nut of the shackle securing bolt. Thereby, the cap is fixedly connected to the shackle and relative movement of the cap with respect to the shackle is substantially prevented.

The shoulders in the bore are provided by a first diameter bore and a second diameter bore, wherein the second diameter bore is smaller than the first diameter bore. The first diameter bore extends from a surface of the cap housing at either end of the bore, and the smaller second diameter bore extends between the first diameter bore and the recess. The first diameter bore and the second diameter bore are preferably coaxial.

By providing the bore through the perimeter portion of the cap with a first diameter bore and a second diameter bore, at least a portion of the bolt head and the bolt nut of the shackle securing bolt is within the first diameter bore. Preferably, a depth of the first diameter bore is equal to or larger than a thickness of the nut and the bolt head of the shackle securing bolt. This has the effect that a top surface of each of the bolt head and bolt nut is flush with an outer surface of the cap housing, or fully housed within the first diameter bore of the cap. By top surface of the bolt head is meant the surface of the bolt head forming a first end portion of the shackle securing bolt. Similarly, by top surface of the bolt nut is meant the surface of the bolt nut that in an operating position faces away from the bolt head. By providing a cap configured for allowing a top surface of each of the bolt head and bolt nut being flush with an outer surface portion of the cap, or fully housed within the first diameter bore, a risk of damaging the shackle securing bolt, is substantially eliminated.

In a preferred embodiment, a portion of the recess is further adapted for also enclosing a perimeter of the shackle pin nut configured for threadedly connection to the pin end of a shackle pin. By enclosing both the end portion of the shackle pin and a perimeter portion of the shackle pin nut by the cap, sharp edges between neighbouring side-faces of for example a hexagon nut, and also sharp edges at an end portion of the shackle pin are prevented from damaging objects abutting against the cap.

In a preferred embodiment, a radial extent of the perimeter portion of the cap is less than a perimeter of an eye of the shackle. This has the effect that there will be a gap between a surface supporting the eyes of a shackle laying on the surface, and the perimeter of the cap. Thus, no hoisting device is required for securing the cap to the shackle.

In one embodiment, a portion of the recess is adapted for close fit with a perimeter portion of the shackle pin nut configured for threadedly connection to the pin end of the shackle pin. One effect of such a close fit is that the cap is prevented from rotation with respect to the nut. By preventing rotation of the cap, a stress between the shackle securing bolt and the cap, especially between the body of the shackle securing bolt and the wall of the second diameter portion of the bore, is at least reduced. Another effect of such a close fit is that a nut for a shackle pin may be inserted into the recess of the cap prior to being threadedly engaged with the shackle pin. Still another effect of such a close fit is that the cap in an operating position provides an additional security against the nut being unscrewed from the pin end of the shackle pin.

In a preferred embodiment, the cap made from a resilient material. A resilient material is less vulnerable to permanent damage when hitting an object, while at the same time a resilient material may be less injurious for an object being in contact with the cap. A suitable resilient material may for example be a polyurethane elastomer. A polyurethan elastomer may be provided in a desired colour. A prototype of the cap was manufactured in a polyurethane elastomer type having a trade name PP-PU-100-65D.

In one embodiment, the cap housing comprises a first housing portion having a first shape, and a second housing portion having a second shape being different from the first shape. In an operating position, the first housing portion is configured for enclosing the nut of the shackle pin, while the second housing portion is configured for enclosing the pin end of the shackle pin and accommodate the shackle securing bolt.

In an embodiment wherein the cap housing comprises a first housing portion and a second housing portion, a transition between the first housing portion and the second housing portion may be smooth. By the term smooth is meant without any sharp edges. Avoiding sharp edges on the cap housing may be important with respect to at least reducing damaging vulnerable objects. A vulnerable object may for example be a synthetic rope used in a marine offshore mooring system.

In one embodiment wherein the cap housing comprises a first housing portion and a second housing portion, the second housing portion of the cap comprises a convex portion. A convex portion may for example be a dome-like portion or a hemisphere. A dome-like portion may have a truncated outer end portion.

The first housing portion may be circular. A circular first housing portion provides a smooth surface without any edges.

As an alternative to a circular first housing portion, the first housing portion of the cap may be non-circular, for example oval, or comprise at least three faces, preferably more than three faces, such as a hexagonal perimeter surface. A non-circular first housing portion may be advantageous for example when the cap is used for screwing the nut onto or out of threaded engagement with the shackle pin. A non-circular first housing portion surface of the cap facilitates gripping of the cap by an operator or by means of a tool. A cap provided with a non-circular first housing portion, may in one embodiment be provided with for example a dome-like second housing portion.

As an alternative to providing the cap housing with a first housing portion and a second housing portion, the cap housing may be formed as a tube provided with a sealed end opposite the end face. Such a tube may in one embodiment be circular. In another embodiment, the tube may be non-circular, for example hexagonal.

In a second aspect of the invention, there is provided a system for use in a marine offshore mooring operation, wherein the system comprises the cap according to the first aspect of the invention, and a shackle, wherein the cap is secured to the shackle by means of the shackle securing bolt.

The system may further comprise a synthetic mooring rope connected to the shackle.

In a third aspect of the invention, a method for protecting an object against wear from at least a shackle securing bolt, is provided. The method comprising the steps of:
a) providing a cap according to the first aspect of the invention, and a shackle comprising a shackle pin and a shackle securing bolt;
b) arranging the cap to enclose at least the pin end of the shackle pin; and
c) inserting the shackle securing bolt in the bore extending through the cap housing and through a bore in the shackle pin; and
d) locking the shackle securing bolt to the cap and the shackle pin by means of the nut of the shackle securing bolt.

The method may further comprise providing a cap having a recess adapted for close fit with a perimeter portion of the nut for the shackle pin, and executing step b) above before the shackle pin nut is screwed onto a threaded end portion of the shackle pin, and; using the cap to rotate the shackle pin nut into engagement with the shackle pin before executing step c). Alternatively, the method may comprise executing step b) above after the shackle pin nut has been screwed onto a threaded end portion of the shackle pin.

In the following is described an example of a preferred embodiment illustrated in the accompanying drawings, wherein:
- Fig. 1: is a perspective view seen from a first side of a cap according to the invention;
- Fig. 2: is a front view of the cap shown in fig. 1;
- Fig. 3: is a cut through A-A in fig. 2;
- Fig. 4: is a perspective view of the cap shown in fig. 1 seen from a second side;
- Fig. 5: is a perspective view a system according to the invention wherein the cap is in an operating position secured to an end portion of a shackle pin;
- Fig. 6: shows a side view seen from right to left of the system shown in fig. 5;
- Fig. 7a: shows a cut through B-B of the system in fig. 6;
- Fig. 7b: shows in a larger scale detail C in fig. 7a; and
- Fig. 8: shows a shackle of the system prior to installing the cap according to the invention.

Any positional indications refer to the position shown in the figures.

In the figures, same or corresponding elements are indicated by same reference numerals. For clarity reasons, some elements may in some of the figures be with-out reference numerals.

A person skilled in the art will understand that the figures are just principal drawings. The relative proportions of individual elements may also be distorted.

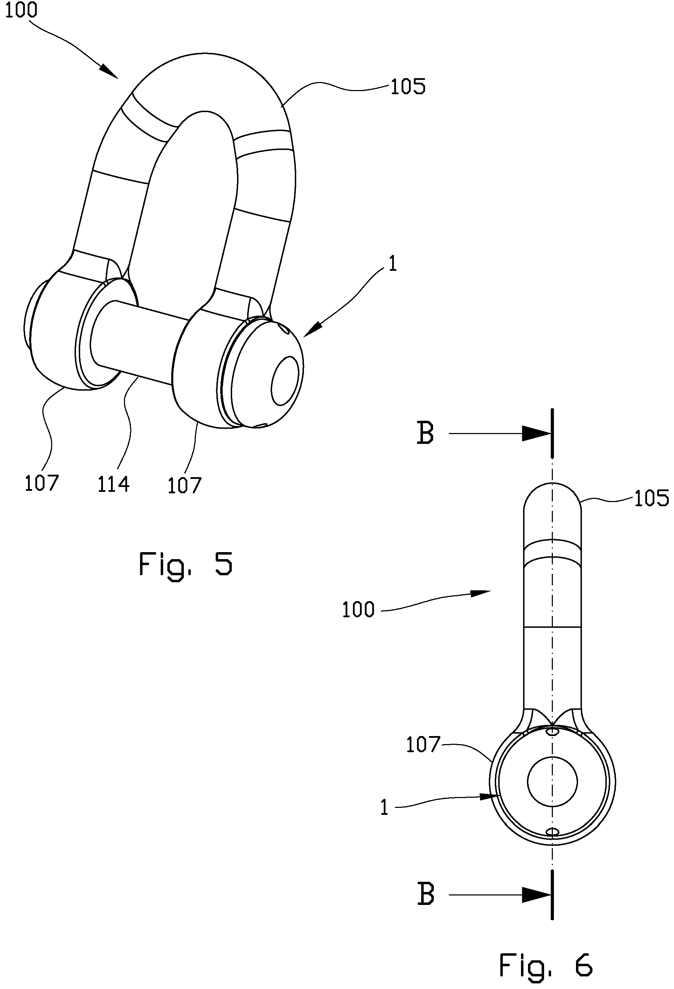

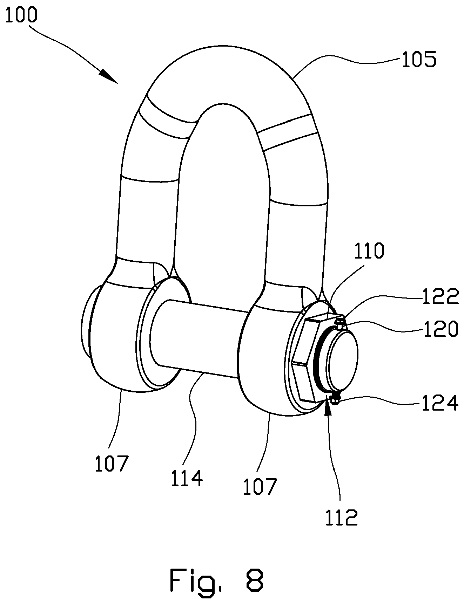

In the figures, reference numeral 1 denotes a cap according to the invention. The cap 1 is configured for use with a shackle 100 (see fig. 5), for protecting an object against damage from at least a shackle securing bolt 120. The shackle securing bolt 120 shown for example in fig. 8, is configured for preventing unintended release of a nut 110 threadedly connected to a pin end 112 of a shackle pin 114 inserted through eyes 107 of a shackle bow 105.

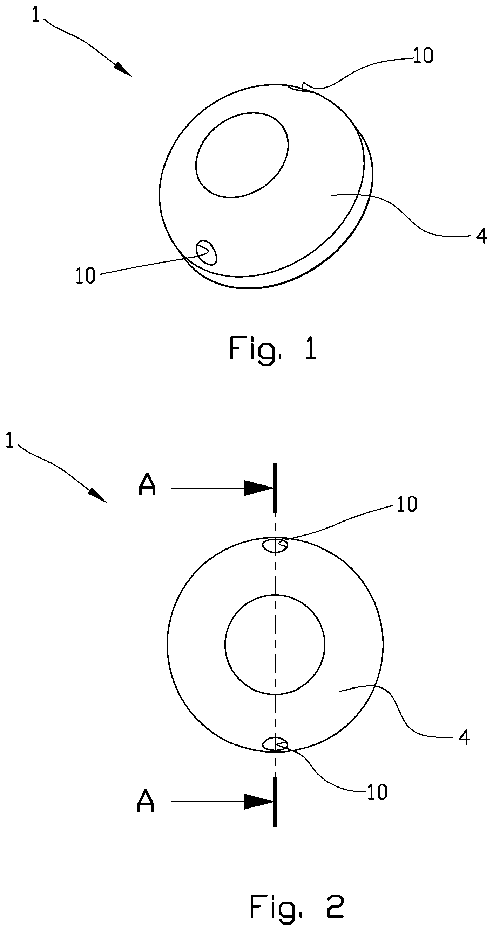

As seen in figures 1-4, the cap 1 comprises an end face 3, and a cap housing 4 extending from the end face 3. In a position of use, the end face 3 abuts, in the embodiment shown, the eye 107 of the shackle bow 105 (see figures 5, 6, 7a and 7b). The cap housing 4 comprises a dome-like portion 41 and an annular perimeter portion 42 between the dome-like portion 41 and the end face 3. However, in alternative embodiments (not shown) at least the perimeter portion 42 may have a non-circular form, for example oval, or the perimeter portion may comprise at least three faces, preferably more than three faces, such as for example a hexagonal perimeter surface.

In an alternative embodiment (not shown), the cap may have an end face 3 configured for abutting against a side portion of the nut 110 facing away from the eye 107 of the shackle bow 105. In such an embodiment, the perimeter of the nut 110 is not covered by the cap 1.

Independently of being configured for enclosing a perimeter of the nut 110 as shown in the figures or being configured for abutting against a side portion of the nut 110, the cap 1 is further provided with a recess 5. In the figures, the recess 5 is configured for enclosing both a perimeter of the shackle nut 110, the pin end 112 of the shackle pin 114, and a portion of the shackle securing bolt 120.

The cap 1 is further provided with a bore 10 extending through the cap housing 4. The bore 10 is configured for receiving the shackle securing bolt 120.

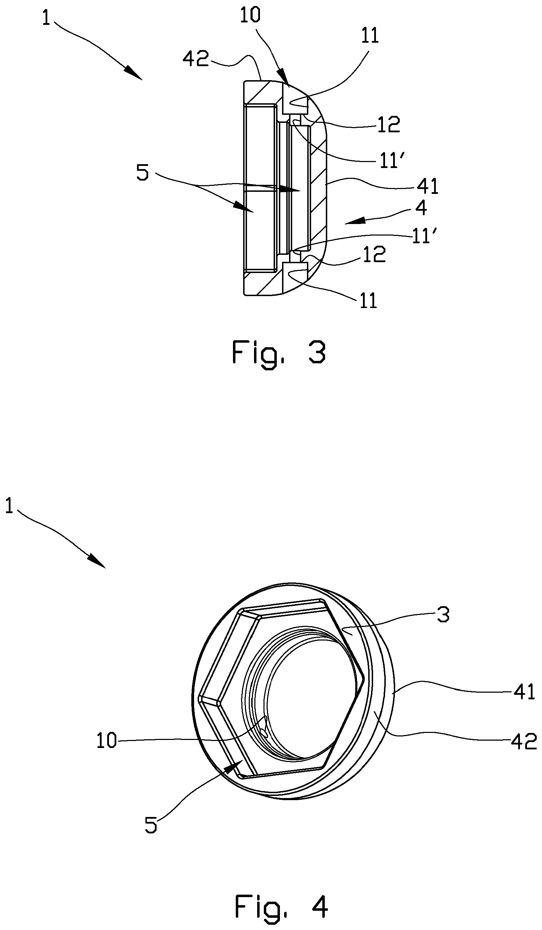

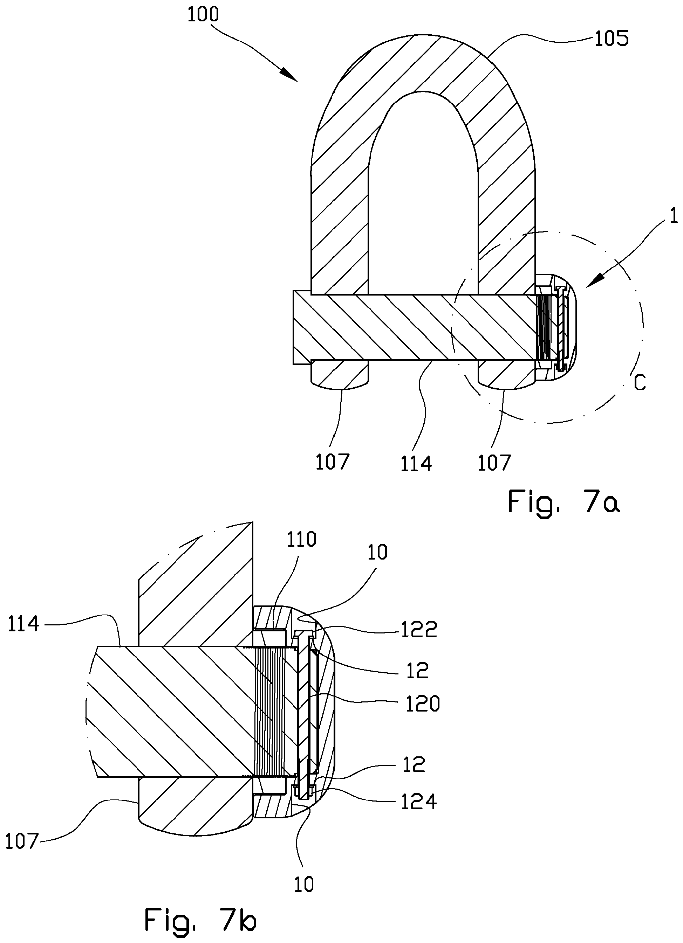

In the embodiment shown in fig. 3, the bore 10 comprises shoulder portions 12 for supporting a bolt head 122 and a bolt nut 124 of the shackle securing bolt 120 (see fig. 7b), so that the cap 1 in an operating position is clamped against the pin end 112 of the shackle pin 114 upon tensioning of the shackle securing bolt 120. Thereby, the cap 1 is fixedly connected to the shackle 100.

In an alternative embodiment (not shown) the bore 10 may be provided without the shoulder portions 12. In such an alternative embodiment, the cap 1 is still prevented from loosening from the shackle 100, at least by the bolt head 122 abutting against a wall portion of the bore 10. In still another embodiment (also not shown), a shoulder portion 12 may be provided only in a portion of the bore 10 configured for receiving the bolt nut 124 since there should be an annular space between the bolt nut 124 and the inner wall of the bore 10, for receiving a socket for a wrench to engage the bolt nut with the threaded end portion of the shackle securing bolt 120.

In fig. 3, the shoulders 12 in the bore 10 are provided by first diameter portions 11 and second diameter portions 11', the second diameter portions 11' being smaller than the first diameter portions 11. The first diameter portions 11 extend from a surface of the cap housing 4 at either end of the bore 10, and the smaller second diameter portions 11' extend between the first diameter portions 11 and the recess 5.

In the embodiment shown in fig. 4, a portion of the recess 5 has a hexagonal form adapted to provide a close fit with a perimeter portion of the shackle nut 110. Advantages of such a close fit are discussed above.

Fig. 8 shows a portion of a shackle pin 114 that has been inserted through and eye 107 of a shackle bow 105, and secured thereto by means of a shackle nut 110 and a shackle securing bolt 120, but prior to securing the cap 1 according to the invention to the shackle pin 114. To secure the cap 1 to the shackle portion shown in fig. 8, the shackle securing bolt 120 has to be removed prior to bringing the cap 1 onto pin end 112 of the shackle pin 114, and clamping the cap 1 to the shackle pin 114 by means of the shackle securing bolt 120 and the bolt nut 124. The shackle nut 110, the shackle securing bolt 120 and the pin end 112 of the shackle pin 114 may therefore be covered as shown in figures 5 and 6.

From the disclosure herein, it should be appreciated that the cap 1 according to the invention solves a long felt need for facilitating protecting an object from damages from at least a shackle securing bolt 120. The cap 1 further protects the shackle securing bolt from being damaged when hitting hard objects. Contrary to prior art method of securing an object such as a synthetic rope used in offshore mooring operations typically involving 3-4 persons wherein the shackle is wrapped in a mat while the shackle is raised above a surface by a hoisting device, the cap 1 according to the invention may be connected to the shackle by only one person while the shackle is resting on a surface. Thus, the invention represents a quick and effective protection of vulnerable portions of the shackle, while at the same time personnel safety is greatly improved. Contrary to a shackle wrapped in a mat, the cap 1 according to the invention may be permanently secured to the shackle until dismantling of the shackle commences.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. A cap (1) for protecting an object against damage from at least a shackle securing bolt (120) configured for preventing unintended release of a nut (110) threadedly connected to a pin end (112) of a shackle pin (114) inserted through eyes (107) of a shackle bow (105),
the cap (1) comprising:
- an end face (3) for facing an eye (107) of a shackle (100), and a cap housing (4) extending from the end face (3)
- a recess (5) extending from the end face (3) and into the cap housing (4), the recess (5) configured for, in a position of use of the cap (1), enclosing at least the pin end (112) of the shackle pin (114); and
- a bore (10) extending through the cap housing (4), the bore (10) configured for receiving a shackle securing bolt (120) having a bolt head (122) and a threaded end portion for receiving a bolt nut (124),
wherein the bore (10) of the cap (1) comprises shoulders (12) for, in an operating position of the cap (1), supporting both the bolt head (122) and the bolt nut (124) of the shackle securing bolt (120),
**characterized in that** the shoulders (12) in the bore (10) are provided by a first diameter bore (11) and a second diameter bore (11'), the second diameter bore (11') being smaller than the first diameter bore (11), the first diameter bore (11) extending from a surface of the cap housing (4) at either end of the bore (10), and the smaller second diameter bore (11') extending between the first diameter bore (11) and the recess (5).

2. The cap (1) according to claim 1, wherein a portion of the recess (5) is adapted for enclosing a perimeter of the shackle pin nut (110) configured for threadedly connection to the pin end (112) of a shackle pin (114).

3. The cap (1) according to claim 1 or 2, wherein a portion of the recess (5) is adapted for close fit with a perimeter portion of the shackle pin nut (110) configured for threadedly connection to the pin end (112) of the shackle pin (114).

4. The cap (1) according to claim any one of the preceding claims, wherein the cap (1) is made from a resilient material.

5. The cap (1) according to any one of the preceding claims, wherein the cap housing (4) comprises a first housing portion (41) having a first shape, and a second housing portion (42) having a second shape being different from the first shape.

6. The cap (1) according to claim 5, wherein a transition between the first housing portion (41) and the second housing portion (42) is smooth.

7. The cap (1) according to claim 5 or 6, wherein the second housing portion (42) of the cap (1) comprises a convex portion.

8. The cap (1) according to any one of claims 5 to 7, wherein the first housing portion (41) is circular.

9. The cap (1) according to any one of claims 5 to 7, wherein the first housing portion (41) is non-circular.

10. The cap (1) according to any one of claims 1 to 4, wherein the cap housing (4) is formed as a tube provided with a sealed end opposite the end face (3).

11. A system for use in a marine offshore mooring operation, wherein the system comprises the cap (1) according to any one of the preceding claims, and a shackle (100), wherein the cap (1) is secured to the shackle (100) by means of a shackle securing bolt (120) and a bolt nut (124).

12. The system according to claim 11, further comprising a synthetic mooring rope connected to the shackle (100).

13. A method for protecting an object against wear from at least a shackle securing bolt (120), **characterised in that** the method comprising the steps of:
a) providing a cap (1) according to any one of claims 1 to 10, and a shackle (100) comprising a shackle pin (114) and a shackle securing bolt (120);
b) arranging the cap (1) to enclose at least the pin end (112) of the shackle pin (114);
c) inserting the shackle securing bolt (120) in the bore (10) extending through the cap housing (4) and through a bore (10) in the shackle pin (114); and
d) locking the shackle securing bolt (120) to the cap (1) and the shackle pin (114) by means of the nut (124) of the shackle securing bolt (120).

14. The method according to claim 13, further comprising providing a cap (1) having a recess (5) adapted for close fit with a perimeter portion of the nut (110) for the shackle pin (114), and executing step b) before the shackle pin nut (110) is screwed onto a threaded end portion (112) of the shackle pin (114), and; using the cap (1) to rotate the nut (110) into engagement with the shackle pin (114) before executing step c).

15. The method according to claim 13, wherein step b) is executed after the shackle pin nut (110) has been screwed onto a threaded end portion (112) of the shackle pin (114).

## Patentansprüche

1. Kappe (1) zum Schützen eines Objekts vor Schaden von mindestens einem Schäkelsicherungsbolzen (120), die so ausgebildet ist, dass sie unbeabsichtigtes Lösen einer Mutter (110) verhindert, die verschraubt mit einem Stiftende (112) eines Schäkelstifts (114) verbunden ist, der in Durchgangsösen (107) eines Schäkelbügels (105) eingesetzt ist, wobei die Kappe (1) Folgendes umfasst:
- eine Stirnfläche (3) zum Weisen zu einer Öse (107) eines Schäkels (100) und ein Kappengehäuse (4), das sich von der Stirnfläche (3) erstreckt;
- eine Aussparung (5), die sich von der Stirnfläche (3) und in das Kappengehäuse (4) erstreckt, wobei die Aussparung (5) so ausgebildet ist, dass sie in einer Verwendungsposition der Kappe (1) mindestens das Stiftende (112) des Schäkelstifts (114) umschließt; und
- eine Bohrung (10), die sich durch das Kappengehäuse (4) erstreckt, wobei die Bohrung (10) so ausgebildet ist, dass sie einen Schäkelsicherungsbolzen (120) aufnimmt, der einen Bolzenkopf (122) und einen mit Gewinde versehenen Endabschnitt zum Aufnehmen einer Bolzenmutter (124) aufweist,
wobei die Bohrung (10) der Kappe (1) Schultern (12) umfasst, um in einer Betätigungsposition der Kappe (1) sowohl den Bolzenkopf (122) als auch die Bolzenmutter (124) des Schäkelsicherungsbolzens (120) zu stützen,
**dadurch gekennzeichnet, dass** die Schultern (12) in der Bohrung (10) durch eine erste Durchmesserbohrung (11) und eine zweite Durchmesserbohrung (11') bereitgestellt sind, wobei die zweite Durchmesserbohrung (11') kleiner ist als die erste Durchmesserbohrung (11), sich die erste Durchmesserbohrung (11) von einer Oberfläche des Kappengehäuses (4) an jedem Ende der Bohrung (10) erstreckt und sich die kleinere zweite Durchmesserbohrung (11') zwischen der ersten Durchmesserbohrung (11) und der Aussparung (5) erstreckt.

2. Kappe (1) nach Anspruch 1, wobei ein Abschnitt der Aussparung (5) so angepasst ist, dass er einen Umfang der Schäkelstiftmutter (110) umschließt, die so ausgebildet ist, dass sie mit dem Stiftende (112) eines Schäkelstifts (114) verschraubt verbindet.

3. Kappe (1) nach Anspruch 1 oder 2, wobei ein Abschnitt der Aussparung (5) so angepasst ist, dass er in einen Umfang der Schäkelstiftmutter (110) eng einpasst, die so ausgebildet ist, dass sie mit dem Stiftende (112) eines Schäkelstifts (114) verschraubt verbindet.

4. Kappe (1) nach einem der vorstehenden Ansprüche, wobei die Kappe (1) aus einem elastischen Material hergestellt ist.

5. Kappe (1) nach einem der vorstehenden Ansprüche, wobei das Kappengehäuse (4) einen ersten Gehäuseabschnitt (41) umfasst, der eine erste Form aufweist, und einen zweiten Gehäuseabschnitt (42), der eine zweite Form aufweist, die von der ersten Form unterschiedlich ist.

6. Kappe (1) nach Anspruch 5, wobei ein Übergang zwischen dem ersten Gehäuseabschnitt (41) und dem zweiten Gehäuseabschnitt (42) glatt ist.

7. Kappe (1) nach Anspruch 5 oder 6, wobei der zweite Gehäuseabschnitt (42) der Kappe (1) einen konvexen Abschnitt umfasst.

8. Kappe (1) nach einem der Ansprüche 5 bis 7, wobei der erste Gehäuseabschnitt (41) kreisförmig ist.

9. Kappe (1) nach einem der Ansprüche 5 bis 7, wobei der erste Gehäuseabschnitt (41) nicht kreisförmig ist.

10. Kappe (1) nach einem der Ansprüche 1 bis 4, wobei das Kappengehäuse (4) als Rohr geformt ist, das mit einem gegenüber der Stirnfläche (3) abgedichteten Ende bereitgestellt ist.

11. System zur Verwendung in einem maritimen Offshore-Verankerungsvorgang, wobei das System die Kappe (1) nach einem der vorstehenden Ansprüche und einen Schäkel (100) umfasst, wobei die Kappe (1) mittels eines Schäkelsicherungsbolzens (120) und einer Bolzenmutter (124) am Schäkel (100) befestigt ist.

12. System nach Anspruch 11, weiter umfassend eine synthetische Festmacherleine, die mit dem Schäkel (100) verbunden ist.

13. Verfahren zum Schützen eines Objekts vor Verschleiß von mindestens einem Schäkelsicherungsbolzen (120), **dadurch gekennzeichnet, dass** das Verfahren die folgenden Schritte umfasst::
a) Bereitstellen einer Kappe (1) nach einem der Ansprüche 1 bis 10 und eines Schäkels (100), der einen Schäkelstift (114) und einen Schäkelsicherungsbolzen (120) umfasst;
b) Anordnen der Kappe (1) so, dass sie mindestens das Stiftende (112) des Schäkelstifts (114) umschließt;
c) Einsetzen des Schäkelsicherungsbolzens (120) in die Bohrung (10), die sich durch das Kappengehäuse (4) und durch eine Bohrung (10) im Schäkelstift (114) erstreckt; und
d) Verriegeln des Schäkelsicherungsbolzens (120) an der Kappe (1) und dem Schäkelstift (114) mittels der Mutter (124) des Schäkelsicherungsbolzens (120).

14. Verfahren nach Anspruch 13, weiter umfassend Bereitstellen einer Kappe (1), die eine Aussparung (5) umfasst, die so angepasst ist, dass sie in einen Umfangsabschnitt der Mutter (110) für den Schäkelstift (114) passt, und Ausführen von Schritt b), bevor die Schäkelstiftmutter (110) auf einen mit Gewinde versehenen Endabschnitt (112) des Schäkelstifts (114) aufgeschraubt wird; und Verwenden der Kappe (1), um vor Ausführen von Schritt c) die Mutter (110) in Eingriff mit dem Schäkelstift (114) zu drehen.

15. Verfahren nach Anspruch 13, wobei Schritt b) ausgeführt wird, nachdem die Schäkelstiftmutter (110) auf einen mit Gewinde versehenen Endabschnitt (112) des Schäkelstifts (114) aufgeschraubt wurde.

## Revendications

1. Capuchon (1) destiné à protéger un objet contre un endommagement provenant d'au moins un boulon (120) de fixation de manille configuré pour empêcher une libération involontaire d'un écrou (110) vissé sur une extrémité (112) de goupille d'une goupille (114) de manille insérée dans des œillets (107) d'un anneau (105) de manille,
le capuchon (1) comprenant :
- une face d'extrémité (3) destinée à faire face à un œillet (107) d'une manille (100), et un logement (4) de capuchon s'étendant depuis la face d'extrémité (3)
- un évidement (5) s'étendant depuis la face d'extrémité (3) et dans le logement (4) de capuchon, l'évidement (5) étant configuré pour, dans une position d'utilisation du capuchon (1), enfermer au moins l'extrémité (112) de goupille de la goupille (114) de manille ; et
- un alésage (10) s'étendant à travers le logement (4) de capuchon, l'alésage (10) étant configuré pour recevoir un boulon (120) de fixation de manille présentant une tête (122) de boulon et une partie d'extrémité filetée destinée à recevoir un écrou (124) de boulon,
dans lequel l'alésage (10) du capuchon (1) comprend des épaulements (12) pour, dans une position de fonctionnement du capuchon (1), supporter à la fois la tête (122) de boulon et l'écrou (124) de boulon du boulon (120) de fixation de manille,
**caractérisé en ce que** les épaulements (12) dans l'alésage (10) sont formés par un alésage de premier diamètre (11) et un alésage de deuxième diamètre (11'), l'alésage de deuxième diamètre (11') étant plus petit que l'alésage de premier diamètre (11), l'alésage de premier diamètre (11) s'étendant depuis une surface du logement (4) de capuchon au niveau de chaque extrémité de l'alésage (10), et l'alésage de deuxième diamètre (11') plus petit s'étendant entre l'alésage de premier diamètre (11) et l'évidement (5).

2. Capuchon (1) selon la revendication 1, dans lequel une partie de l'évidement (5) est adaptée pour renfermer un périmètre de l'écrou (110) de goupille de manille configuré pour être vissé sur l'extrémité (112) de goupille de la goupille (114) de manille.

3. Capuchon (1) selon la revendication 1 ou revendication 2, dans lequel une partie de l'évidement (5) est adaptée pour un ajustement serré avec une partie périphérique de l'écrou (110) de goupille de manille configuré pour être vissé sur l'extrémité (112) de goupille de la goupille (114) de manille.

4. Capuchon (1) selon l'une quelconque des revendications précédentes, dans lequel le capuchon (1) est fabriqué à partir d'un matériau élastique.

5. Capuchon (1) selon l'une quelconque des revendications précédentes, dans lequel le logement (4) de capuchon comprend une première partie de logement (41) présentant une première forme, et une deuxième partie de logement (42) présentant une deuxième forme différente de la première forme.

6. Capuchon (1) selon la revendication 5, dans lequel une transition entre la première partie de logement (41) et la deuxième partie de logement (42) est lisse.

7. Capuchon (1) selon la revendication 5 ou la revendication 6, dans lequel la deuxième partie de logement (42) du capuchon (1) comprend une partie convexe.

8. Capuchon (1) selon l'une quelconque des revendications 5 à 7, dans lequel la première partie de logement (41) est circulaire.

9. Capuchon (1) selon l'une quelconque des revendications 5 à 7, dans lequel la première partie de logement (41) est non circulaire.

10. Capuchon (1) selon l'une quelconque des revendications 1 à 4, dans lequel le logement (4) de capuchon est formé comme un tube muni d'une extrémité étanche en regard de la face d'extrémité (3).

11. Système destiné à être utilisé dans une opération d'amarrage offshore en milieu marin, dans lequel le système comprend le capuchon (1) selon l'une quelconque des revendications précédentes, et une manille (100), dans lequel le capuchon (1) est fixé à la manille (100) au moyen d'un boulon (120) de fixation de manille et d'un écrou (124) de boulon.

12. Système selon la revendication 11, comprenant en outre un câble d'amarrage synthétique relié à la manille (100).

13. Procédé destiné à protéger un objet contre l'usure provenant d'au moins un boulon (120) de fixation de manille, **caractérisé en ce que** le procédé comprend les étapes consistant à :
a) fournir un capuchon (1) selon l'une quelconque des revendications 1 à 10, et une manille (100) comprenant une goupille (114) de manille et un boulon (120) de fixation de manille ;
b) agencer le capuchon (1) pour enfermer au moins l'extrémité (112) de goupille de la goupille (114) de manille ;
c) insérer le boulon (120) de fixation de manille dans l'alésage (10) s'étendant à travers le logement (4) de capuchon et à travers un alésage (10) dans la goupille (114) de manille ; et
d) bloquer le boulon (120) de fixation de manille sur le capuchon (1) et la goupille (114) de manille au moyen de l'écrou (124) du boulon (120) de fixation de manille.

14. Procédé selon la revendication 13, comprenant en outre la fourniture d'un capuchon (1) présentant un évidement (5) adapté pour un ajustement serré avec une partie périphérique de l'écrou (110) pour la goupille (114) de manille, et l'exécution de l'étape b) avant que l'écrou (110) de goupille de manille ne soit vissé sur une partie d'extrémité filetée (112) de la goupille (114) de manille, et l'utilisation du capuchon (1) pour faire tourner l'écrou (110) en prise avec la goupille (114) de manille avant d'exécuter l'étape c).

15. Procédé selon la revendication 13, dans lequel l'étape b) est exécutée après que l'écrou (110) de goupille de manille a été vissé sur une partie d'extrémité filetée (112) de la goupille (114) de manille.
